# EUROPEAN PATENT SPECIFICATION

(11) **EP 4 424 593 B1**
(45) Date of publication and mention of the grant of the patent: **27.05.2026**
(21) Application number: 23159743.6
(22) Date of filing: 02.03.2023
(51) Int. Cl.: B64C 39/02, B64U 10/13, B64U 50/27, B64U 20/70, B64U 20/87, B64U 101/70, B64U 101/26, B64U 101/30, B64U 101/31, B64U 101/32

(54) **DRONE AND A SUPPORTING STRUCTURE FOR PAYLOAD**
DROHNE UND STÜTZSTRUKTUR FÜR NUTZLAST
DRONE ET STRUCTURE DE SUPPORT POUR CHARGE UTILE

(43) Date of publication of application: 04.09.2024
(73) Proprietor: Flybotix SA, 1020 Renens (CH)
(72) Inventor: Bouabdallah, Samir, 1400 Yverdon Les Bains (CH)
(74) Representative: P&TS SA (AG, Ltd.)

(56) References cited:
- WO-A1-2018/035482
- WO-A1-2021/260497
- BR-A2- 102021 024 961
- CN-A- 110 194 259
- CN-A- 113 928 561
- US-A1- 2016 375 983

## Description

### Technical \domain

The present invention concerns unmanned flying vehicles such as flying drones, in particular inspection flying drones, and the corresponding structures adapted to maintain some payload. The present invention also concerns an inspection method using such drones and payload.

### Related art

Unmanned vehicles, commonly known as drones, are subject to an increasing development so that number of applications can be performed automatically or remotely. WO2018/035482A1 relates to a robotic drone. WO2021260497A1 relates to a protective cage for an unmanned aerial vehicle. BR102021024961A2 relates to a coating repair application system using a remotely piloted aircraft. CN113928561A relates to a steel box girder automatic inspection unmanned aerial vehicle with an anti-collision capability. CN110194259A relates to an intelligent cage rotor unmanned aerial vehicle. US2016375983A1 relates to a self-righting frame and an aeronautical vehicle. Aerial vehicles often comprise several rotors arranged on the periphery of a central structure to form a multi-copter. The blades of the several rotors, together, define an area of hindrance around the aerial vehicle, which limits the possible applications of the drone. In particular, such multi-copters can hardly be used in tiny spaces such as tanks or pipes or any similar closed and tiny sites. Furthermore, known multi-copter suffer from a limited flight time in such environment, in particular due to the fact that they should bear small propellers to limit their hindrance while carrying significant weight, such as protective cage and various payloads. It results that, the usual multi-copters are not ideal for inspections of closed areas.

Other types of flying drones have been developed, based on a central rotor, such as the ones described in WO2019097425. Such vehicles are usually more compact that the usual multi-copters above mentioned. At least the hindrance of the blades remains limited compared to the body of the drone. However, the arrangement of payload on such a compact drone remains challenging for several reasons. The lack of available space on the body of the drone limits the amount of payload. Furthermore, due the central arrangement of the rotors, the payloads need often to be arranged toward the periphery of the drone, cantilevered, which tends to induce a lack of equilibrium in the flight which needs to be compensated. Furthermore, a payload projected outward the central body of the drone is more sensitive to vibrations and unwanted movements. Parasitic movements of the payloads can disturb some functionalities of the drone, in particular for visual inspection or digitalisation tasks. Increasing the rigidity of the payload support usually results in a weight increase, which limits the autonomy of the drone.

Beside the above-mentioned drawbacks, an inspection drone needs to transmit visual or other environmental data in real time, so as to allow, for example, the pilot to drive it accurately. The corresponding dedicated detection means and communication module thus need to be implemented onto the drone, which limits the overall payload which can be embedded on the drone for other tasks.
Therefore, there is room for improvement of the modularity and/or efficiency of compact flying drones.

### Short disclosure of the invention

An aim of the present invention is the provision of a compact flying drone adapted to bear some payload. It is in particular an aim of the present invention to provide a compact flying drone, adapted for inspection of confined area, including mapping tasks, visual inspection, gas detection. It is a further aim of the present invention to provide a flying drone adapted for various tasks, and thus having an increase flexibility of use. It is a further aim of the invention to provide a compact flying drone having improved performances in terms of autonomy and/or quality of detection.

Another aim of the invention is to provide a method of inspection of confined areas. It is in particular an aim of the present invention to propose a flexible and efficient method to inspect closed and confined spaces.

According to the invention, these aims are attained by the object of the independent claims and further described in the dependent claims.

With respect to what is known in the art, the invention provides the advantage of a more flexible, adaptable and performant compact drone, a extended flight time, as well as a detection method better adapted to confined spaces.

### Short description of the drawings

Exemplar embodiments of the invention are disclosed in the description and illustrated by the following drawings :
- Figures 1a, 1b : General view of a drone according to an example of the present disclosure in a confined space.
- Figure 2a: Schematic side representation of a flying drone according to an embodiment of the present invention.
- Figure 2b: Schematic front representation of a flying drone according to an embodiment of the present invention.
- Figures 2c, 2d: Schematic representation, from the top, of a flying drone according to an embodiment of the present invention.
- Figure 3: Schematic side representation of a flying drone according to another embodiment of the present invention.
- Figure 4: Schematic side representation of a flying drone according to another embodiment of the present invention.
- Figures 5a, 5b, 5c: Schematic side representations of a flying drone according to the present invention equipped with various payload.

### Examples of embodiments of the present invention

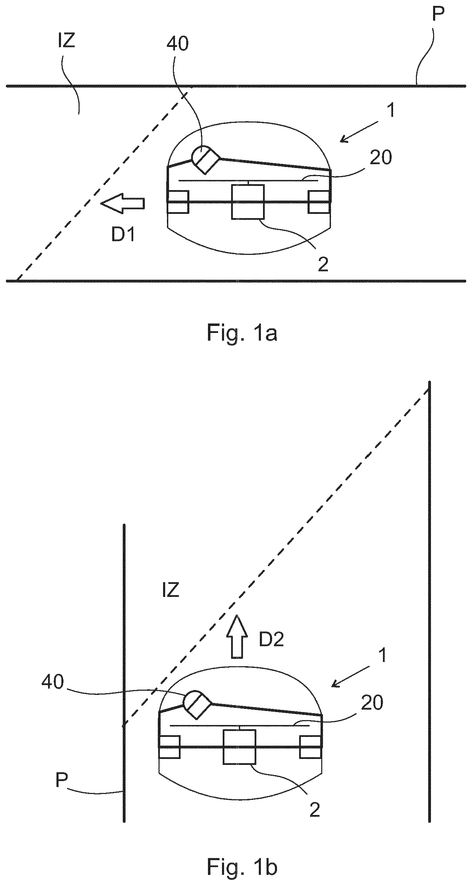

Figures 1a and 1b show an example of a drone **1** according to the present disclosure. In this specific example, the drone **1** is used as an inspection or detection drone in a confined area **P** such as a pipe or a tank. It moves toward an horizontal driving direction **D1** in figure 1a and in a vertical driving direction **D2** in figure 1b. It brings a payload adapted to sense the environment, such as a surface inspection or detection payload 40. Such a surface inspection or detection payload 40 can be a camera, a 3D camera or lidar or any related visual inspection or detection mean, either for direct view or for digitalisation or both of the environment. It can be for example a rotative camera or a rotative lidar adapted to cover a larger field of view. A camera is typically used for visual inspection, either in the visible wavelengths or in IR or UV wavelengths. A lidar is typically used for 3D mapping or digitalisation. In figures 1a and 1b the doted lines schematically represents the limit of the field of view of an arbitrary selected sensor. The limit of field of view can have a different static or dynamic profile depending on the type and number of detection means. Other environmental sensors as a surface inspection or detection payload 40 can of course be used, either as alternatives or in addition, as better described below.

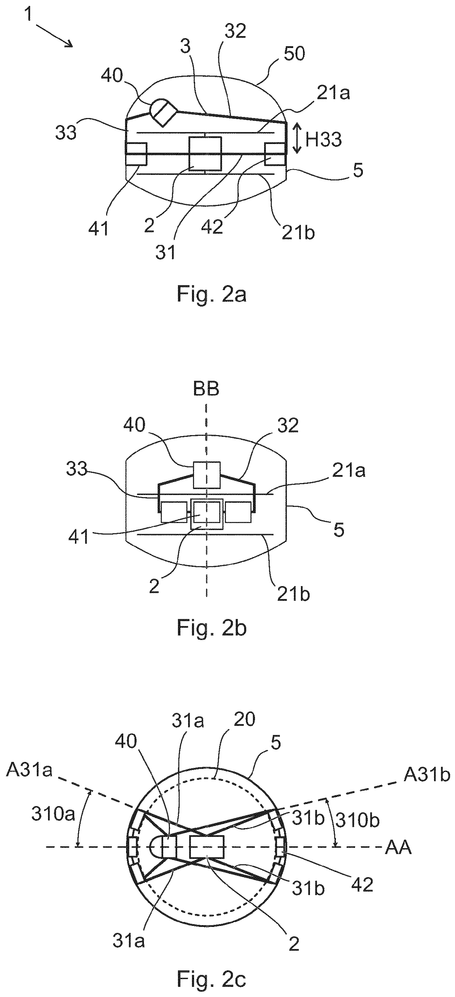

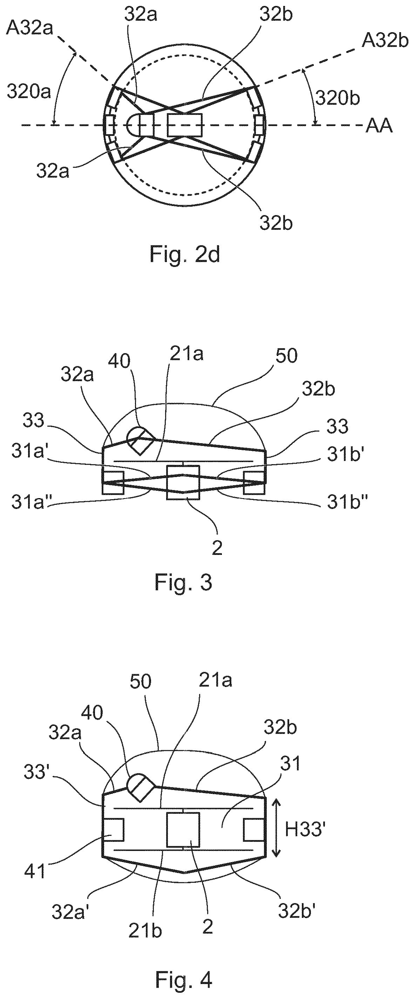

The drone 1 is provided with a at least one motor 2 and the corresponding blades 21 forming the actuator of the drone 1. A motor 2 can be provided with several co-axial blades 21a, 21b, as better shown in figures 2a, 2b, 2c and 2d for example. The number of motors is also not limited to 1. More than one motor, such as 2, 3, 4 or more can be considered, each one having their own set of blades.

According to an embodiment, a drone 1 can be provided with more than one motor each one having only one set of blades. According to another embodiment, a drone according to the present disclosure is provided with only one motor, having two co-axial sets of blades **21a, 21b.**

According to an embodiment, the surface inspection or detection payload **40** allows to detect the defects or failures of the walls surrounding the confined area **P.** Such defects can be related to a degradation of the surface, for example due to oxidation or corrosion, or cracks in the walls, which can potentially lead to some leakage. The surface inspection or detection payload can alternatively or in addition be used for 3D mapping tasks or any other mapping activities.

The field of view of the surface inspection or detection payload **40** is oriented so as to inspect an inspected zone **IZ** of the confined space **P.** According to an embodiment, the surface inspection or detection payload **40** is arranged at an angle comprised between 0° and 90° with regard to at least one of the horizontal **D1** or vertical driving direction **D2,** of the drone **1.**Preferably, it is arranged at an angle comprised between 10° and 80°, or between 20° and 70°, or around 40° to 50° such as 45°, with regard to at least one of the horizontal **D1** or vertical driving direction **D2,** of the drone **1.** In a preferred embodiment, the orientation of the surface inspection or detection payload **40** allows to cover all the field of view, or more than 90%, or more than 95% of the field of view in the driving direction **D1, D2** of the drone so as to detect potential obstacles in the pathway of the drone 1. The surface inspection or detection payload **40** can be used for remotely piloting the drone **1** in addition to the visual inspection and/or mapping of the walls of the confined space **P.** The surface inspection or detection payload **40** can thus replace the usual dedicated camera used to remotely drive the drone **1.**

Examples provided in figures 1a and 1b have no limitative purpose. The payload, such as the above-mentioned surface inspection or detection payload **40** can be of any other kind, as it will be more detailed below.

The payload is arranged on a supporting structure **3,** better shown on figures 2 to 5. The supporting structure **3** is adapted to firmly maintain the payload, for example so as to limit or suppress the vibration of the payload. This can be of a crucial importance in case of visual inspection, 3D mapping and/or when the visual field is used for driving the drone **1.** As it will be better described, the supporting structure **3** provides enough rigidity and/or robustness for the payload fixation and/or orientation. The supporting structure 3 is furthermore adapted to remain light, while still robust, so as to not deteriorate the autonomy of the drone **1.** The supporting structure 3 further allows a large diversity and number of payload that the drone **1** can bring.

The supporting structure **3** is better shown in figures 2 to 5. It comprises at least one primary arm assembly **31.** A primary arm assembly **31** is connected to a robust part of the drone **1,** which defines an anchor point. The anchor point is preferably at a central position. It can for example correspond to the motor **2** of the drone **1** or to the motor casing or any related core part of the drone **1.** Alternatively, the arms of the primary arm assembly can be all joined at the anchor point. Alternatively, a transversal rode can be provided at the anchor point, so as to join the arms of the primary arm assembly **31.** The anchor point needs not to be perfectly at the centre of the drone. The anchoring area of a primary arm assembly **31** can correspond to less than 30% or less than 20% or less than 10% of the overall diameter of the drone. The overall diameter is defined as its largest lateral dimension.

A primary arm assembly **31** projects outwards its anchor position, meaning toward the periphery of the drone **1.** According to an embodiment a primary arm assembly **31** comprises one, two or more front primary arms **31a** which project from the anchor position toward a front position or a front side position of the drone **1.** A primary arm assembly **31** further comprises one, two or more back primary arm **31b,** projecting from the anchor position toward a back position or a back side position of the drone **1.**

A primary arm assembly **31** can comprise several arms projecting around the anchor point. Preferably, the arms of a primary arm assembly **31** are symmetrically arranged around their anchor point.

Depending on the position of the anchor point, the lengths of the arms of the arm assemblies **31** can be the same or different. According to an embodiment, the front primary arms **31a** are shorter than the back primary arms **31b.** Alternatively, the front primary arms **31a** can be longer than the back primary arms **32b.**

A primary arm assembly **31** is preferably arranged in a plane corresponding to a central plane of the drone **1.** A central plane denotes a plane substantially parallel to the blades **21** and comprising the corresponding motor **2.** Alternatively, one or several of the arms of a primary arm assembly **31** can form an angle with respect to the central plane of the drone 1. For example, from its anchor point to the outward extremity, an arm of the primary arm assembly **31** can form an angle comprised between 5° and 20°, or between 10° and 15°, either directed below the central plane or above the central plane.

According to an embodiment, the drone of the present disclosure comprises two sets of co-axial blades **21a, 21b,** surrounding a common motor 2. In such an arrangement, the primary **arm** assembly or assemblies **31** remain, from their anchor point to their extremities, between the two facing set of blades so as to not hinder the rotation of the blades. In case the arms of the corresponding primary arm assembly **31** are angled with regard to a central plane, the corresponding angle remains sufficiently low to avoid hindering the blades.

According to an advantageous embodiment better shown in figure 2c, the drone according to the present description comprises one primary arm assembly **31,** comprising two front primary arms **31a** projecting frontward of the drone **1** in a front side direction **A31a,** which forms with the main axis **AA** of the drone **1** a front primary angle **A310a** different from 0° and 180° so as to not be aligned with the main axis **AA.** The main axis **AA** corresponds for example to the horizontal driving direction **D1** above-mentioned. The two front primary arms **31a** are arranged in a symmetrical way with regard to the main axis **AA** of the drone 1. The front primary angle **A310a** can be comprised between 10° and 85°, or between 20° and 70°, or between 25° and 45°. The front angle can be adapted according to the needs.

Also, more than two front primary arms **31a** can be arranged as symmetrical pairs of front primary arms having different front primary angles (not shown).

Alternatively, only one front arm can be provided in the direction of the main axis **AA.**

In addition, the supporting structure **3** can comprise two back primary arms **31b** symmetrically arranged with regard to the main axis **AA.** For example, the two back primary arms **31b** project backwards of the drone 1 in a back side direction **A31b** forming with the main axis **AA** of the drone 1 a primary back angle **A310b.** The primary back angle **A310b** is preferably different from 0° or 180° so as to not be aligned with the main axis AA. The back primary angle A310b can be comprised between 10° and 85°, or between 20° and 70°, or between 25° and 45°. It can be adapted according to the needs. The back primary angle A310b can be identical or different from the front primary angle **A310a.** more particularly, one or both of the length and angles of the front and back primary arms can be independently from another adapted to the needs.

Alternatively, only one back primary arm **31b** is provided, which is aligned with the main axis **AA.**

Alternatively, more than two back primary arms **31b** are arranged as symmetrical pairs of back primary arms having different back primary angles.

Different arrangement of the front and back primary arms can be combined. For example, the supporting structure **3** of the present disclosure can comprise one or more than one pair of front primary arms and only one back primary arm, or only one front primary arm with one or more pairs of back primary arms. Alternatively or in addition, a front primary arm aligned with the main axis **AA** can be combined with a pair of front primary arms symmetrically arranged. Alternatively or in addition, a back primary arm aligned with the main axis AA can be combined with a pair of back primary arms symmetrically arranged.

The main axis **AA** defines the axis passing from the central plane above mentioned and oriented in the forward/backward direction of the drone **1.** It is orthogonal to the axis of the rotor or rotors **BB.** In other words, the central plane can be defined as an horizontal plane for a standard flying position of the drone 1. The axis of the rotor **BB** can be considered as a vertical axis, for standard flying position of the drone 1. The plane comprising the main axis AA and the axis of the rotor **BB** is a vertical plane for the standard flying position of the drone 1. Here, the terms horizontal and vertical have the usual meaning. When applied to the present drone, they relate to a normal standard position of the drone, either at rest on a support or flying without deviations.

The supporting structure **3** of the drone according to the present disclosure further comprises at least one secondary arm assembly **32.** A secondary arm assembly **32** is adapted to maintain at least one payload arranged in at least one payload plane different, or parallel, to the central plane above-mentioned. A secondary arm assembly **32** comprises one, two or more front secondary arms **32a.** The front secondary arms are preferably arranged symmetrically with respect to the main axis of the drone **1,** or to the vertical plane comprising the main axis **AA.** According to an embodiment, the supporting structure **3** of the present disclosure comprises two front secondary arms (figure 2d) projecting frontward of the drone **1** in a front side direction **A32a** forming with the vertical plane comprising the main axis **AA** of the drone **1** a front secondary angle **A320a** different from 0° and 180° so as to not be aligned with the main axis **AA.** The front secondary angle A320a can be comprised between 10° and 85°, or between 20° and 70°, or between 25° and 45°. It can be adapted according to the needs.

Alternatively, more than two front secondary arms can be symmetrically arranged with regard to the vertical plane comprising the main axis **AA.**

Alternatively, only one front secondary arm can be provided, comprised in the vertical plane comprising the main axis **AA.**

In addition, the supporting structure **3** can comprise two back secondary arms **32b.** The two back secondary arm **32b** are preferably symmetrically arranged with regard to the main axis **AA** or a vertical plan comprising the same. According to an embodiment, the two back secondary arm **32b** project backwards of the drone 1 in a back side direction **A32b** which forms with the main axis **AA** of the drone 1 or a vertical plane comprising the same, a back secondary angle **A320b** different from 0° and 180° so as to not be aligned with it. The back secondary angle **A320b** can be comprised between 10° and 85°, or between 20° and 70°, or between 25° and 45°. It can be adapted according to the needs. It can be the same or different from the front secondary angle **320a.**

Alternatively, only one back secondary arm can be provided, parallel to the main axis **AA.**

Alternatively, more than two back secondary arms can be symmetrically arranged, as several pairs of arms, with regard to the vertical plane comprising the main axis **AA.**

The front and back arms of the secondary arm assembly **32** can be independently from each others arranged in a plane parallel to the central plane, and corresponding to a payload plane. Alternatively, one or more of the front and back arms of the secondary arm assembly **32** can be independently angled with respect to such a plane. For example, an arm of the secondary arm assembly **32** can form an angle comprised between 5° and 20°, or between 10° and 15°, either directed below the payload plane or above the payload plane.

The length of the front secondary arms **32a** is different from the length of the back secondary arms **32b.**

According to an embodiment, the front and back secondary arms of the secondary arm assembly **32** are joined at a point comprised in a payload plane. The corresponding connection point can define a support for a payload. For example, a visual detection and/or digitalisation mean can be placed at the connection point between all the front and back arms of a secondary arm assembly **32.** The multiple front and back secondary arms limit or avoid the vibrations and/or parasitic moves of the payload. This does not exclude that other payloads are arranged elsewhere on the supporting structure **3.**

According to a preferred embodiment, the number of the front secondary arms is identical to the number of the front primary arms. According to another embodiment, the number of the front secondary arms differ from the number of the front primary arms. In this particular case, the front primary and secondary arms can be connected by means of several connecting members **33,** better described below.

According to a preferred embodiment, the number of the back secondary arms is identical to the number of the back primary arms. According to another embodiment, the number of the back secondary arms differ from the number of the back primary arms. In this particular case, the back primary and secondary arms can be connected by means of several connecting members **33,** better described below.

A set of blades **21a, 21b** of the present drone **1** defines a blade area 20, corresponding to the space occupied by the blades **21a, 21b** when they are in rotation. In case of several set of blades co-axially arranged, two superimposed blade areas can be defined on both sides of the central plane. It is crucial that the supporting structure **3** does not interfere with the blades. The supporting structure **3** and the corresponding arm assemblies thus remains outside the blade area **20.**

The arms of the primary arm assembly **31** and those of the secondary arm assembly **32** are connected to each other so as to form a common structure. According to an embodiment, the extremity of the arms of the primary arm assembly **31** is directly connected to the extremity of the corresponding arms of the secondary arm assembly **32.** In this case, the connection needs to be far enough the blade area 20 so as to not interfere with the blades.

Alternatively, the arms of one or more of the primary 31 and secondary 32 arm assemblies are bended so that the corresponding connection point can be closer to the blade area 20.

In a preferred embodiment, the extremity of the arms of the primary arm assembly 31 is connected to the corresponding arms of the secondary arm assembly 32 by mean of one or several connecting members 33, better shown on figure 2a or 2b. A connecting member 33 is a peripheral member joining the extremities of the arms of the primary 31 and secondary **32** arm assemblies. According to an embodiment, a connecting member can be parallel to the rotor axis **BB,** in other words, being vertical so that the corresponding arms of the primary **31** and secondary **32** arm assembly are superimposed, as shown for example in figures 2c and 2d. According to another embodiment, a connecting member **33** can be angled with regard to the vertical, while remaining in a plane parallel to the rotor axis **BB.** In this case, the arms of the primary **31** and secondary **32** arm assemblies are shifted from one another. This can also be the case, when several arms of the primary arm assembly **31** are connected to one corresponding arm of the secondary arm assembly, or vice versa. In this case, several connection members can be used, which are not all vertical.

In any case, the connecting member or members **33** have a length **H33** adapted to space out the corresponding arms of the primary **31** and the secondary **32** arm assemblies so that they do not interfere with the corresponding blade area **20.** The connecting members **33** also allow to limit the overall hindrance of the drone **1.** They can be arranged just outside the blade area **20.** It is here understood that the primary **31** and secondary **32** arm assemblies can be arranged respectively below and above a set of blades. In other words, a primary **31** and secondary **32** arm assemblies, together with the corresponding connection member, surround a blade area **20.**

The supporting structure **3** further comprises at least one support (not represented) adapted to maintain a payload. Such a support can be fixed so as to limit unwanted moves or vibrations. A payload support is provided at the connection point between the front and back arms of the secondary arm assembly **32.** According to an embodiment, such a payload support can be orientable so as to orient a payload. For example, in case of surface inspection or detection payload **40,** its optical axis can be aligned with the main axis **AA** direction or angled with the main axis direction, as described above. Alternatively or in addition, a support can be modular so as to allow the fixation of different payloads, or payload types. Alternatively, a support can be mobile along an arm of the primary **31** or secondary **32** arm assembly so that its position can be adjusted. A payload support can be motorised so as to modify the position and/or orientation of a payload during the flight of the drone **1.** A payload support, beside its ability to mechanically maintain and/or orient a payload, can also comprise some electrical and/or electronic connection means so that a payload can be directly plugged to a central electronic system of the drone **1** or to a communication module or to a command unit or any other electrical unit.

According to an embodiment, one or both of the primary **31** and the secondary **32** arm assemblies can comprise sub-structures. Figure 3 shows a side view of an example, wherein the primary arm assembly **31** comprises an upper arm sub-structure **31a', 31b'** and a lower arm substructure **31a", 31b".** The corresponding face view remain unchanged compared to figure 2b. The corresponding top view also remains unchanged with regard to the figures 2c and 2d. Such an arrangement increases the robustness of the supporting structure 3. It further offers more attaching points for payloads.

According to another embodiment, more than one secondary arm assembly can be provided. Figure 4 shows a side view of an example, wherein a first secondary arm assembly is arranged as above described and wherein a second secondary arm assembly **32a', 32b'** is arranged opposite the first one with regard to the primary arm assembly **31.** The second secondary arm assembly **32a', 32b'** needs not to be identical to the first one. For instance, the number of arms, their length, their orientation with regard to the main axis, and any other parameter can be defined independently from the first secondary arm assembly **32.** The second secondary arm assembly **32** is also connected to the primary arm assembly **31** either directly or by mean of a connection member. According to a preferred embodiment, the connection member **33'** is adapted to connected all the primary arm assembly **31** and the first **32** and second **32'** secondary arm assemblies. Its length **H33'** is therefore determined so that none of the blade areas are hindered by the supporting structure, in particular in case of co-axially arranged blades **21a, 21b.**

According to an embodiment, the drone here described can comprise a peripheral structure **5.** Such a peripheral structure surrounds the core structure of the drone **1,** and in particular the blades **21a, 21b.** The peripheral structure **5** can be a circular band either rigid or flexible arranged on the central plane. Alternatively or in addition, the peripheral structure **5** can define a cage having several ribs **50** surrounding the blades. Any other suitable peripheral structure can be envisaged.

According to an embodiment, part of the supporting structure **3** above described is common to the peripheral structure **5** or to a portion of the peripheral structure **5.** For example, at least one of the connection member **33, 33'** can be integrated into, or form part of the peripheral structure **5.** Such an arrangement allows to minimize the overall weight of the drone 1 without loosing functionality.

The arms of the above-described primary and secondary arm assemblies can be of any suitable material, in particular light materials such as plastic or polymer rods or tubes. Material such as glass fibres, carbon fibres, organic polymers, or combination thereof can be used. The arms can be combined either partly or totally, with reinforcing members such as metallic or hard plastic rods or equivalent reinforcing members. Some or all of the arms can be flexible, or slightly flexible, or on the contrary not flexible, so as to properly maintain the payload on the drone **1.**

According to an embodiment some or all of the arms of the above described primary **31,** and secondary **32** arm assemblies, including the connecting members **33** where applicable, can be easily connected and disconnected from one another, so as to provide a modular support structure **3.** For example, arms of different lengths and/or rigidity and/or material can be used depending on the type or number of payload to be implemented on the drone **1.** In addition, the number and position of the arm of the primary arm assembly **31** and/or the secondary arm assembly **32,** can be adapted according to the needs. Any suitable modular arrangement can be envisaged, including connectable rod fragments, telescopic rods foldable rods or equivalent.

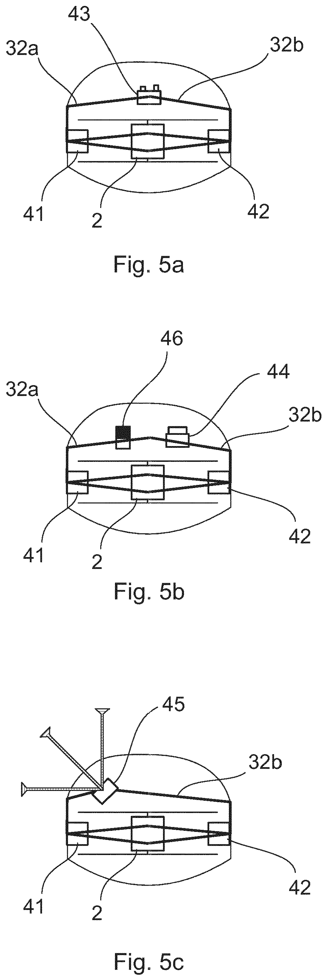

The payload designates any device integrated or embedded in the drone to perform its tasks. Figures 5a, 5b, 5c provide examples of different configurations of the drone 1. In figure 3 and 4, the payload is a surface inspection or detection payload **40** such as a camera or a lidar, preferably having rotary detection means. Any other visual inspection tool can be used, including infrared, UV, three dimensional, and combination thereof. In figure 5a, the payload **43** denotes a gas detection module. It can be dedicated to any suitable gas detection such as carbon monoxide, carbon dioxide, hydrogen, toxic gases, explosive gases. A gas detection module **43** can be dedicated to the detection of only one gas or several different gases. A drone **1** according to the present invention can be provided with several gas detection if several different gas needs to be detected. Figure 5b shows an example wherein the drone **1** is equipped with a radiation sensing module **44** and a wide angle camera module **46.** Figure 5c shows a configuration wherein the present drone is equipped with a thickness measurement module 45. Such a thickness measurement module 45 is adapted to determine the thickness of a wall, using any suitable technology such as acoustic waves or equivalent. These examples are not limitative.

Although the above mentioned payload are arranged on the secondary arm assembly 32, this does not exclude that other payload is arranged elsewhere on the supporting structure 3. For example, a payload can be arranged on a second secondary arm assembly 32a', 32b' above described.

According to an embodiment, one or several cameras 41 can be arranged in front of the drone **1,** between two front arms of a primary arm assembly **31.** To this end, an intermediate support (not represented) can be provided between the corresponding arms so as to fix such a camera **41.** Alternatively, the peripheral structure **5** can be used to maintain such a camera. The camera, or a set of several cameras can be used to navigate the drone.

A counterweight **42** can be provided on the diametrically apposed point of the drone so as to equilibrate the drone **1.** According to an embodiment, the counterweight **42** is provided with a fixation means adapted to receive another payload, such a gas detection module, an irradiation detection module, another camera, or any suitable tool.

According to an embodiment, the core body of the drone **1,** or the anchor point, can be provided with one or several fixation means adapted to receive modular batteries. The battery of the drone **1** can be split in two or more battery modules so as to be arranged at predetermined places on the drone **1.** For example, the primary arm assembly **31** can be provided with adequate fixation means. According to an embodiment, the position of the battery modules can be adjusted on the primary arm assembly **31** so as to better equilibrate the drone **1** in flight, according to the payload it brings. Battery modules also present the advantage to separately transport the batteries, which can be requested for transporting the drone at a mission site or an inspection site.

The above mentioned embodiments are non limitative examples, and do not aim at being mutually exclusive. They can be combined or merged so as to represent any possible configuration of the drone **1** and its applications.

The present disclosure also relates to a method of use of a drone **1,** in particular an inspection method using a drone as here described. The method comprises a step of providing a drone **1** with at least one sensor. The sensor can be selected among the above-mentioned sensors, including a surface inspection or detection payload **40,** a radiation sensing module **44,** a wide angle camera module **46,** a thickness measurement module **45** as well any combination thereof. Other sensors can be implemented. The sensors are arranged on a supporting structure **3** as above described. In particular, at least one of the sensors embedded in the drone **1** is arranged at a connection point between the arms of a secondary arm assembly **32.** According to an embodiment, a surface inspection or detection payload **40** is implemented at this junction point. Such a visual inspection module can be a lidar, adapted for 3D mapping. According to an embodiment, the surface inspection or detection payload **40** can also be used for the remote piloting of the drone 1. The optical axis of the surface inspection or detection payload **40** can be oriented at an angle none aligned with the main axis **AA,** as above-mentioned.

The method can comprise a step of arranging a primary arm assembly **31** and a secondary arm assembly **32** as above described on the drone **1.** This step can comprise the selection of arms having a proper length and/or nature, so as to be well adapted to maintain the selected sensors to be provided on the drone **1.** For example, the front arms of the secondary arm assembly **32** can be selected as being shorter, equal or larger than the back arms of the secondary arm assembly **32,** depending on the nature of the mission the weight of the payload, or any other relevant parameter. If necessary, two different secondary arm assemblies can be provided on the drone **1.** The selected arms are assembled so as to produce the suitable supporting structure **3.** The arrangement of the arm assemblies can alternatively or in addition comprise the selection of the position the selected arms, so that they are properly oriented. For example, predetermined positions and/or orientation of the arms can be provided on the drone, in particular at the anchor point.

The method further comprises the step of piloting the drone **1,** provided with the suitable sensors, inside a confined area so as to accomplish a predetermined mission. The predetermined mission can be a 3D mapping, a quality inspection of the walls of the confined area, a gas detection, an irradiation detection, a thickness measurement of the walls, or a combination thereof. According to a preferred embodiment, the autonomy of the drone **1** is higher than 15 minutes, or 30 minutes, or higher than 1 or 2 or 3 hours. The confined area can be any closed volume such as a tank, like a gas or an oil tank, a pipe or a container. The mission can also be applied to less confined zone such as warehouses or a building inspection. According to an embodiment, the piloting of the drone is operated by means of a remote piloting station. It can also be automated, based on preestablished maps. To this end, the drone **1** comprises the suitable guidance sensors such as cameras or lidar. According to an embodiment, the mission of the drone **1** and the piloting of the drone **1** are both operated by means of a given sensor such as a surface inspection or detection payload **40.**

The method further comprises a step of collecting data related to the mission. The data can be temporarily stored within the drone **1** during the mission so as to be retrieved after the mission. Alternatively, the data are sent to a remote unit by mean of an appropriate communication module. The data can be sent in real time or at regular times.

The method can comprise further steps such as retrieving the drone **1** after its mission and folding or dissociating at least some parts of the drone **1** so as to put is away. For example, the battery modules can be separately removed from the drone. The supporting structure **3** can be dissociated so as to facilitate the transportation of the drone **1.**

The present invention further relates to a kit comprising some arms adapted to set at least a primary and a secondary arm assembles as above-defined. The kit can also comprise a set of several sensors such as those above-mentioned, as well as the corresponding payload supports. The kit can further comprise a drone **1,** comprising at least one rotor.

A "drone" is here understood as flying drone or an aerial vehicle. A "drone" here designates an unmanned vehicle, being either autonomous or remotely piloted.

### reference symbols in the figures

- 1: Drone
- 2: motor
- 20: Blade area
- 21, 21a, 21b: Blades
- 31: Primary arm assembly
- 32: Secondary arm assembly
- 31a, 31b: Arms of the primary arm assembly
- 31a',31b', 31a", 31b": arm substructure
- 32a, 32b: Arms of the secondary arm assembly
- 33: connecting members
- 40: surface inspection or detection payload
- 5: Peripheral structure
- 50: Ribs
- AA: Main axis
- BB: Rotor axis
- A310a: Front primary angle
- A320a: Front secondary angle
- A31a, A32a: Front side direction
- A310b: Back primary angle
- A320b: Back secondary angle
- A31b, A32b: Back side direction
- P: Confined area
- D1: Horizontal driving direction
- D2: Vertical driving direction
- IZ: Inspection zone
- H33, H33': Length of the connection member

## Claims

1. A drone (1) comprising at least one motor (2) and at least one set of propeller blades (21a, 21b), and a supporting structure (3) adapted to maintain at least one payload, wherein said supporting structure (3) comprises:
- at least one primary arm assembly (31) connected to a central anchor point and projecting outwards from said central anchor point,
- at least one secondary arm assembly (32) adapted to maintain said at least one payload, and
- at least one payload support adapted to maintain a payload, arranged on said at least one secondary arm assembly (32)
wherein said at least one primary arm assembly (31) comprises one or more front primary arms (31a) projecting from the anchor point to a front position or a front side position of the drone, and one or more back primary arms (31b) projecting from the anchor position toward a back position or a back side position of the drone,
wherein said at least one secondary arm assembly (32) comprises at least one front secondary arm (32a) and at least one back secondary arm (32b), wherein the length of said at least one front secondary arm (32a) is different from the length of said at least one back secondary arm (32b), and
**characterized in that** said payload support is provided at the connexion point between said front (32a) and back arms (32b) of said secondary arm assembly (32).

2. The drone according to claim 1, wherein said supporting structure (3) further comprises one or more connecting members (33, 33') adapted to connect the arms of said at least one primary arm assembly (31) with the arms of said at least one secondary arm assembly (32).

3. The drone according to one of claims 1 and 2, wherein said at least one set of propeller blades (21a, 21b) defines a blade area (20), and wherein said supporting structure (3) surrounds said blade area (20).

4. The drone according to one of claims 1 to 3, wherein said at least one primary arm assembly (31) is arranged on a central plane of the drone, comprising said motor (2).

5. The drone according to one of claims 1 to 4, wherein said at least one secondary arm assembly (32) comprises a first secondary arm assembly and a second secondary arm assembly both arranged on opposite sides of a central plane comprising said motor (2).

6. The drone according to one of claims 1 to 5, further comprising a peripheral structure (5) wherein part of said peripheral structure is combined or merged with part of said supporting structure (3).

7. The drone according to one of claims 1 to 6, wherein said at least one payload is selected among a surface inspection or detection payload (40), a radiation sensing module (44), a wide angle camera module (46), a thickness measurement module (45), a gas detection module (43), and combinations thereof.

8. The drone according to claim 7, and when a surface inspection or detection payload (40) is selected, wherein said at least one payload comprises a lidar, adapted for 3D mapping activity, the optical axis of which is oriented at an angle comprised between 0° and 90°, preferably between 10° and 80° with regard to a central plane comprising said motor (2).

9. The drone according to one of claims 1 to 8, wherein said at least one primary (31) and secondary (32) arm assemblies comprise arms which are adapted to be folded or disconnected so as to modulate the configuration of said supporting structure (3).

10. The drone according to one of claims 1 to 9, wherein the arms of the at least one primary arm assembly (31) and the arms of the at least one secondary arm assembly (32) are connected to each other so as to form a common structure.

11. An inspection method comprising the steps of:
- selecting a drone having at least one anchor point and arranging a supporting structure (3), as defined in claims 1 to 9, on said at least one anchor point,
- defining an inspection mission and arranging suitable sensors adapted to perform said mission onto said supporting structure (3), and
- piloting the drone so as perform the inspection mission and collect the corresponding data.

12. The method according to claim 11, wherein said mission is a 3D mapping of a confined area, said at least one suitable sensors comprising a lidar oriented with an angle comprised between 0° and 90°, preferably between 10° and 80° with a traveling direction (D1, D2) of the drone.

## Patentansprüche

1. Eine Drohne (1) mit mindestens einem Motor (2) und mindestens einen Satz Propellerblätter (21a, 21b), und einer Trägerstruktur (3), die geeignet ist, mindestens eine Nutzlast zu halten, wobei die Trägerstruktur (3) Folgendes umfasst:
- mindestens eine primäre Armanordnung (31), die mit einem zentralen Ankerpunkt verbunden ist und die nach aussen aus dem zentralen Anker herausragt,
- mindestens eine sekundäre Armanordnung (32), die geeignet ist, die mindestens eine Nutzlast zu halten, und
- mindestens eine Nutzlastabstützung, die dazu geeignet ist, eine Nutzlast die an der mindestens einen sekundären Armanordnung (32) angeordnet ist, zu halten,
wobei die mindestens eine primäre Armanordnung (31) einen oder mehrere vordere primäre Arme (31a) aufweist, die vom Ankerpunkt zu einer vorderen Position der Drohne herausragen, und eine oder mehrere hintere primäre Arme (31b) aufweist, die vom Ankerpunkt zu einer hinteren Position oder einer hinteren Seitenposition der Drohne herausragen,
wobei die zumindest eine sekundäre Armanordnung (32) zumindest einen vorderen sekundären Arm (32a) und zumindest einen hinteren sekundären Arm (32b) aufweist,
wobei die Länge des zumindest einen vorderen sekundären Arms (32a) unterschiedlich ist zur Länge des zumindest einen hinteren sekundären Arms (32b), und
**dadurch gekennzeichnet, dass**
die Nutzlastabstützung an dem Verbindungspunkt zwischen den vorderen (32a) und hinteren (32b) Armen des sekundären Armanordnung vorgesehen ist.

2. Die Drohne nach Anspruch 1, wobei die Trägerstruktur (3) ferner ein oder mehrere Verbindungselemente (33, 33') umfasst, die dazu geeignet sind, die Arme der mindestens einen primären Armanordnung (31) mit den Armen der mindestens einen sekundären Armanordnung (32) zu verbinden.

3. Die Drohne nach einem der Ansprüche 1 oder 2, wobei der mindestens eine Satz von Propellerblättern (21a, 21b) einen Blattbereich (20) definiert, und wobei die Trägerstruktur (3) den Blattbereich (20) umgibt.

4. Die Drohne nach einem der Ansprüche 1 bis 3, wobei die mindestens eine primäre Armanordnung (31) in einer zentralen Ebene der Drohne angeordnet ist und den Motor (2) umfasst.

5. Die Drohne nach einem der Ansprüche 1 bis 64, wobei die mindestens eine sekundäre Armanordnung (32) eine erste sekundäre Armanordnung und eine zweite sekundäre Armanordnung umfasst, die jeweils auf gegenüberliegenden Seiten einer den Motor (2) umfassenden Mittelebene angeordnet sind.

6. Die Drohne nach einem der Ansprüche 1 bis 5, ferner umfassend eine periphere Struktur (5), wobei ein Teil der peripheren Struktur mit einem Teil der Trägerstruktur (3) kombiniert oder fusioniert ist.

7. Die Drohne nach einem der Ansprüche 1 bis 6, wobei die mindestens eine Nutzlast ausgewählt ist aus einer Oberflächeninspektions- oder - erfassungsnutzlast (40), einem Strahlungssensormodul (44), einem Weitwinkelkameramodul (46), einem Dickenmessmodul (45), einem Gasdetektionsmodul (43), und Kombinationen davon.

8. Die Drohne nach einem der Ansprüche 1 bis 7, indem eine ist aus einer Oberflächeninspektions- oder -erfassungsnutzlast (40) als Nutzlast gewählt ist, und indem die mindestens eine Nutzlast ein Lidar umfasst, das für eine 3D-Kartierungsaktivität geeignet ist und dessen optische Achse in einem Winkel zwischen 0° und 90°, vorzugsweise zwischen 10° und 80°, in Bezug auf eine den Motor (2) umfassende Mittelebene ausgerichtet ist.

9. Die Drohne nach einem der Ansprüche 1 bis 8, wobei die mindestens eine primäre (31) und die mindestens eine sekundäre (32) Armanordnung Arme umfasst, die eingeklappt oder abgekoppelt werden können, um die Konfiguration der Trägerstruktur (3) zu modulieren.

10. Die Drohne nach einem der Ansprüche 1 bis 9, wobei die Arme der mindestens einen primären Armanordnung (31) und Arme der mindestens einen sekundären Armanordnung (32) derart miteinander in Verbindung stehen, dass die eine gemeinsame Struktur bilden.

11. Ein Inspektionsverfahren, die folgenden Schritte umfassend:
- Auswählen einer Drohne mit mindestens einem Ankerpunkt und Anordnen einer Trägerstruktur (3) nach einem der Ansprüche 1 bis 10 an dem mindestens einen Ankerpunkt,
- Definieren eines Inspektionsauftrags und Anordnen geeigneter Sensoren, die zur Durchführung des Auftrags geeignet sind, auf der Trägerstruktur (3), und
- Steuern der Drohne, um die Inspektionsmission durchzuführen und die entsprechenden Daten zu sammeln.

12. Das Verfahren nach Anspruch 11, wobei der Auftrag eine 3D-Kartierung eines begrenzten Bereichs ist, wobei der mindestens eine geeignete Sensor ein Lidar umfasst, das in einem Winkel zwischen 0° und 90°, vorzugsweise zwischen 10° und 80°, mit einer Bewegungsrichtung (D1, D2) der Drohne ausgerichtet ist.

## Revendications

1. Drone (1) comprenant au moins un moteur (2) et au moins un ensemble de pales d'hélice (21a, 21b), et une structure de support (3) adaptée pour maintenir au moins une charge utile, dans lequel ladite structure de support (3) comprend :
- au moins un ensemble de bras primaire (31) relié à un point d'ancrage central et faisant saillie vers l'extérieur à partir dudit point d'ancrage central,
- au moins un ensemble de bras secondaire (32) adapté pour maintenir ladite au moins une charge utile, et
- au moins un support de charge utile adapté pour maintenir une charge utile, disposé sur ledit au moins un ensemble de bras secondaire (32),
où :
ledit au moins un ensemble de bras primaire (31) comprend un ou plusieurs bras primaires avant (31a) faisant saillie depuis le point d'ancrage vers une position avant ou une position latérale avant du drone, et un ou plusieurs bras primaires arrière (31b) faisant saillie depuis la position d'ancrage vers une position arrière ou une position latérale arrière du drone,
dans lequel ledit au moins un ensemble de bras secondaire (32) comprend au moins un bras secondaire avant (32a) et au moins un bras secondaire arrière (32b), dans lequel la longueur dudit au moins un bras secondaire avant est différente de la longueur dudit au moins un bras secondaire arrière, et **caractérisé en ce que**
ledit support de charge utile est prévu au point de connexion entre lesdits bras avant (32a) et arrière (32b) dudit ensemble de bras secondaires (32).

2. Le drone selon la revendication 1, dans lequel ladite structure de support (3) comprend en outre un ou plusieurs éléments de connexion (33, 33') adaptés pour connecter les bras dudit au moins un ensemble de bras primaire (31) aux bras dudit au moins un ensemble de bras secondaire (32).

3. Le drone selon l'une des revendications 1 et 2, ledit au moins un ensemble de pales d'hélice (21a, 21b) définit une zone de pales (20), et dans lequel ladite structure de support (3) entoure ladite zone de pales (20).

4. Le drone selon l'une des revendications 1 à 3, dans lequel ledit au moins un ensemble de bras primaire (31) est disposé sur un plan central du drone, comprenant ledit moteur (2).

5. Le drone selon l'une des revendications 1 à 4, dans lequel ledit au moins un ensemble de bras secondaire (32) comprend un premier ensemble de bras secondaire et un deuxième ensemble de bras secondaire, tous deux disposés sur des côtés opposés d'un plan central comprenant ledit moteur (2).

6. Le drone selon l'une des revendications 1 à 5, comprenant en outre une structure périphérique (5) dans laquelle une partie de ladite structure périphérique est combinée ou fusionnée avec une partie de ladite structure de support (3).

7. Le drone selon l'une des revendications 1 à 6, dans lequel ladite au moins une charge utile est choisie parmi une charge utile d'inspection ou de détection de surface (40), un module de détection de rayonnement (44), un module de caméra grand angle (46), un module de mesure d'épaisseur (45), un module de détection de gaz (43) et leurs combinaisons.

8. Le drone selon la revendication 7, et lorsqu'une charge utile d'inspection ou de détection de surface (40) est sélectionnée, dans lequel ladite au moins une charge utile comprend un lidar, adapté à une activité de cartographie 3D, dont l'axe optique est orienté selon un angle compris entre 0° et 90°, de préférence entre 10° et 80° par rapport à un plan central comprenant ledit moteur (2).

9. Le drone selon l'une des revendications 1 à 8, dans lequel lesdits au moins un ensemble de bras primaire (31) et secondaire (32) comprennent des bras qui sont adaptés pour être repliés ou déconnectés de manière à moduler la configuration de ladite structure de support (3).

10. Le drone selon l'une des revendications 1 à 9, dans lequel les bras dudit au moins un ensemble de bras primaire (31) et les bras dudit au moins un ensemble de bras secondaire (32) sont reliés les uns aux autres de manière à former une structure commune.

11. Procédé d'inspection comprenant les étapes suivantes :
- sélectionner un drone ayant au moins un point d'ancrage et disposer une structure de support (3), telle que définie dans les revendications 1 à 9, sur ledit au moins un point d'ancrage,
- définir une mission d'inspection et disposer des capteurs adaptés pour effectuer ladite mission sur ladite structure de support (3), et
- piloter le drone de manière à effectuer la mission d'inspection et à collecter les données correspondantes.

12. Le procédé selon la revendication 11, dans lequel ladite mission est une cartographie 3D d'une zone confinée, lesdits au moins un capteur adapté comprenant un lidar orienté selon un angle compris entre 0° et 90°, de préférence entre 10° et 80° par rapport à une direction de déplacement (D1, D2) du drone.
